# FASCICULE DE BREVET EUROPEEN

(11) **EP 2 923 482 B1**
(45) Date de publication et mention de la délivrance du brevet: **20.10.2021**
(21) Numéro de dépôt: 13808089.0
(22) Date de dépôt: 21.11.2013
(51) Int. Cl.: H04M 7/00, H04L 12/58, H04W 4/21, H04W 4/60, H04M 3/42, H04M 3/56

(54) **SERVICE DE COMMUNICATION VOIX A PARTIR D'UN RESEAU SOCIAL**
SPRACHKOMMUNIKATIONSDIENST AUS EINEM SOZIALEN NETZWERK
VOICE COMMUNICATION SERVICE FROM A SOCIAL NETWORK

(30) Priorité: 21.11.2012 FR 1261100
(43) Date de publication de la demande: 30.09.2015
(73) Titulaire: ORANGE, 92130 Issy-les-Moulineaux (FR)
(72) Inventeur: BENRIKHI, Anne, F-92140 Clamart (FR); GODINIAUX, Olivier, F-75015 Paris (FR); AMET, Benoît, F-92794 Issy Moulineaux Cédex 9 (FR)
(74) Mandataire: Plasseraud IP
(86) Numéro de dépôt international: PCT/FR2013/052817
(87) Numéro de publication internationale: WO 2014/080131

(56) Documents cités:
- EP-A1- 2 028 834
- WO-A1-2008/098627
- WO-A1-2012/001016
- GB-A- 2 450 385
- US-A1- 2002 071 539
- US-A1- 2010 020 952
- US-A1- 2011 069 661

## Description

### Domaine technique

La présente invention est relative à la fois au domaine des réseaux sociaux basés sur le réseau de type Internet et au domaine de la communication voix.

### Etat de la technique

Les réseaux sociaux fondés sur le réseau Internet permettent à ses utilisateurs de constituer des groupes d'amis ou de connaissance professionnelle. A cet effet, ils fournissent à leurs utilisateurs des outils (ou encore services) d'échanges d'information, qui peuvent être par exemple des photos, des états de présence, des informations d'actualité, etc ... Ces services d'échanges sont accessibles via des interfaces utilisateur adaptées.

Parmi les services qui peuvent être proposés aux utilisateurs de ces réseaux sociaux, il est possible de prévoir une mise en relation téléphonique initiée depuis le réseau social considéré. En effet, pour un même utilisateur, on associe son identifiant dans un réseau social avec son numéro de téléphone, et par là même, cet utilisateur peut être joint par téléphone depuis le réseau social via son identifiant de réseau social. Dans ce contexte, on peut prévoir un serveur adapté pour la fourniture de ce service. On connait des systèmes dans lesquels le serveur in fine met ainsi en communication téléphonique l'appelant avec l'appelé en prenant en charge la numérotation de l'appelé. Dans ce contexte, l'appelé reçoit un appel téléphonique et ne dispose d'aucune information supplémentaire, mis à part éventuellement celle représentée par le numéro du serveur qui peut s'afficher sur l'écran de son téléphone, comme c'est le cas lors d'un appel téléphonique classique.

L'invention offre une solution ne présentant pas les inconvénients de l'état de la technique. D'autres solutions alternatives pour ce problème sont décrites dans les documents brevet US2011/0069661 A1, US2002/0071539 A1, WO2008/098627 A1 et US2008/0253363 A1.

L'invention est défini par les revendications indépendantes 1, 7, 14, 16 et 18. Les modes de réalisation préférés sont définis par les revendications dépendantes.

On entend par les termes 'communication voix', tout type de session de communication téléphonique établie entre au moins deux terminaux de communication qui permet à au moins deux utilisateurs respectifs desdits terminaux de communication de communiquer par la voix entre eux. Une communication voix peut être ainsi mise en œuvre par exemple dans un réseau de communication de type réseau téléphonique comme un réseau mobile (comme réseau GSM, UMTS, etc ..).

On entend par les termes 'réseau de communication', tout type de réseau qui est adapté pour permettre la mise en relation d'au moins deux terminaux de communication dans une communication téléphonique. La communication possible dans ce type de réseau pouvant être de type voix et de type données. Un tel réseau de communication est donc un réseau de communication téléphonique, qui peut être un réseau basé sur des protocoles de communication mobile, comme par exemple GSM, UMTS, 3G, 4G. Dans un mode de réalisation de la présente invention, le réseau de communication considéré est à la fois adapté pour gérer l'établissement de communication voix et de communication données entre les différents terminaux de ce réseau.

On entend par les termes 'terminal de communication', tout type de terminal de communication qui permet d'établir des sessions de communication voix via un réseau de communication téléphonique. Il peut également permettre d'établir des communications données dans le réseau de communication auquel il appartient, c'est-à-dire dans lequel il peut initier l'établissement de communication téléphonique ou recevoir et accepter des communications qui lui sont destinées. Ce terminal peut par exemple être un téléphone mobile de tout type, une tablette, etc ...

On entend par les termes 'identifiant de communication', un identifiant associé à un terminal de communication dans le réseau de communication auquel il appartient. Un tel identifiant de communication permet au terminal auquel il est associé d'être joint et donc de recevoir une communication dans le réseau de communication considéré. Un tel identifiant peut être un numéro de téléphone dans un réseau de téléphonie mobile.

On entend par les termes 'réseau social', tout type de réseau social sur le réseau Internet qui peut regrouper des communautés de personnes sur différents critères, comme par exemple des affinités personnelles, ou encore des proximité de parcours professionnel, ou encore des centres d'intérêts similaires, etc ... On peut citer à titre d'exemple le réseau social fondé sur Facebook, twitter, Viadeo, LinkedId, etc ... Un tel réseau social peut être basé sur un réseau de communication au sens des termes définis ci-dessus.

On entend par les termes 'identifiant de réseau social', tout type d'identifiant qui permet d'identifier un compte d'une personne sur le réseau social considéré. En général, il s'agit d'une référence créée par l'utilisateur au moment de la création de son compte. Cette référence peut être une chaîne de caractères et/ou une image, photo, etc...Un tel identifiant de réseau social peut être indiqué au sein du réseau social sous un format différent de celui qui est visible par l'utilisateur ou par les personnes de son réseau de relation.

On entend par les termes 'requête de communication', un requête visant à demander la mise en communication entre au moins deux terminaux de communication du réseau de communication auquel appartiennent ces terminaux de communication. Une telle requête peut correspondre, dans un mode de réalisation de la présente invention, à un message reçu dans le réseau de communication depuis un terminal quelconque (qui peut être différent du terminal de communication sur lequel la communication voix aura lieu) dont l'utilisateur souhaite être mis en communication vocale avec une autre personne utilisatrice d'un autre terminal. Aucune limitation n'est attachée au type de ce message. Il est important de noter ici que cette requête de communication peut être émise depuis un terminal qui est distinct du premier terminal. Tel peut être le cas, notamment, lorsqu'un utilisateur est connecté sur un réseau de communication via un terminal qui n'a pas de capacité de gestion de communication voix. Dans ce cas, le terminal de la personne souhaitant la communication voix, depuis lequel est émis la requête de communication, est distinct du terminal de communication dont l'identifiant de communication est associé à l'identifiant de réseau social indiqué dans la requête de communication. Ainsi, une personne peut initier la requête de communication depuis un PC, alors que c'est son terminal de téléphonie mobile qui a son numéro de téléphone associé à son identifiant de réseau social.

On entend par les termes 'notification applicative' tout type de notification pouvant être transmise sur le réseau de communication et pouvant être traitée au niveau applicatif d'un terminal de communication du réseau de communication. Ce niveau applicatif d'un terminal de communication selon un mode de réalisation de la présente invention est par la suite référencée sous les termes 'application de service'. Cette application de service représente le niveau applicatif adapté pour la mise en œuvre d'un procédé de gestion de service de communication au niveau du terminal.

Il convient de noter qu'il est prévu une association des identifiants de communication des terminaux avec des identifiants de réseau sociaux respectifs, dans un mode de réalisation de la présente invention. Cette association est connue depuis le serveur. Elle peut être stockée dans une base de données sans aucune limitation attachée à cet aspect, le serveur ayant accès à ces informations d'association entre identifiants de communication dans le réseau de communication et identifiants de réseau social du réseau social. Grâce à cette association, une mise en communication voix peut être mise en œuvre par le serveur sur la simple information d'identifiant de réseau social. Aucune limitation n'est attachée à la phase d'enrôlement qui permet cette association. On peut notamment prévoir une phase préalable d'inscription au service de gestion de communication dans laquelle chaque souscripteur déclare souhaiter associer un terminal de communication avec un identifiant de réseau social. A cet effet, il peut fournir à la fois un identifiant de réseau social et l'identifiant de communication du terminal sur lequel il souhaite pouvoir être joint via le réseau social concerné. On peut aisément prévoir qu'un utilisateur déclare plusieurs terminaux de communication associés respectivement à plusieurs réseaux sociaux, étant donné qu'un même utilisateur peut avoir plusieurs comptes dans différents réseaux sociaux. Aucune limitation à ce type de situation n'est attaché à la présente invention.

Dans un exemple, un serveur accessible depuis un réseau de communication, est avantageusement adapté pour émettre une notification applicative à destination d'un second terminal de communication identifié par son identifiant de communication dans le réseau de communication, par exemple son numéro de téléphone, cette notification indiquant l'identifiant de réseau social du premier terminal. Cette notification applicative est, dans un mode de réalisation, générée à partir d'une requête de communication reçue au préalable, indiquant les premier et second identifiants de réseau social qui sont respectivement associés aux premier et second identifiants de communication.

Grâce à ces caractéristiques, il est avantageusement possible d'inviter un utilisateur du second terminal de communication à être en communication voix avec un utilisateur du premier terminal de communication tout en l'informant de l'identifiant de réseau social de celui qui souhaite le joindre. Une telle notification permet d'offrir un service de mise en communication entre au moins deux personnes via leurs terminaux de communication respectifs sur la base d'un parcours client à la fois clair, simple et sécurisant. En effet, grâce à cette notification indiquant l'identifiant de réseau social associé au premier terminal de communication, l'utilisateur du second terminal de communication est en mesure de décider d'accepter la communication sur la base d'une information claire et importante qui lui permet de reconnaitre l'autre personne par son identité dans le réseau social considéré. Cette information permet de filtrer de manière simple, rapide et efficace une telle demande de communication.

De manière générale, un utilisateur d'un réseau de communication peut être extrêmement sollicité via son terminal de communication au quotidien. De ce fait, il ne souhaite pas lors d'un appel devoir divulguer son numéro de téléphone afin de se protéger de la multiplication des sollicitations de communication voix et de contrôler la diffusion de son numéro de téléphone. Mais pour autant, quand cet utilisateur de réseau de communication est sollicité pour une communication voix, il souhaite disposer d'informations sur le contexte de la communication avant d'accepter celle-ci. En effet, si une sollicitation pour une communication provient d'un numéro masqué par exemple, l'appelé aura tendance à être réticent à prendre l'appel.

La présente invention permet très avantageusement de répondre à ces deux problématiques : d'une part le besoin de contrôler et de réduire la diffusion de son numéro de téléphone et d'autre part de disposer d'informations lors d'une sollicitation de communication voix. En effet, grâce à la présente invention, d'une part, il n'est nul besoin de dévoiler son identifiant de communication lorsqu'on invite une personne à une communication voix. Seul l'identifiant de réseau social est dévoilé, le serveur étant seul à utiliser l'association identifiant de réseau social et identifiant de communication. Ainsi, la confidentialité de l'identifiant de communication peut être conservée. Et, d'autre part, grâce à la présente invention également, un terminal de communication sollicité pour une communication voix peut tout de même disposer d'information utile pour connaître le contexte de la communication, notamment il dispose au moins d'un identifiant de réseau social. Il peut également connaître la raison de la communication via le thème qui peut être transmis dans la requête. Grâce à la notification applicative, il est possible de solliciter une personne pour une communication voix en lui fournissant des informations contextuelles utiles à la décision d'accepter ou non l'invitation, sans toutefois devoir lui transmettre l'identifiant de communication de l'initiateur, comme le numéro de téléphone par exemple.

Grâce à ces caractéristiques, il est possible d'aider un utilisateur à filtrer ses communications voix sans toutefois exiger de dévoiler les numéros de téléphones des 'appelants'.

On peut aisément prévoir que la notification application indique également une image associée à l'identifiant de réseau social, cette image pouvant être une photo de la personne correspondante. Ainsi, on peut proposer à l'utilisateur d'accepter ou de décliner la mise en communication sur la base d'une photo par exemple de la personne souhaitant cette mise en communication voix.

Dans un exemple, le procédé de gestion de service de communication comprend en outre les étapes suivantes, après l'étape /a/:
/i/ identifier le premier identifiant de communication à partir du premier identifiant de réseau social reçu dans la requête de communication;
/ii/ émettre une notification applicative à destination du premier terminal de communication sur la base du premier identifiant de communication.

Ici, le serveur étant en mesure d'identifier l'identifiant de communication du premier terminal sur la base du premier identifiant de réseau social, il est également capable d'émettre une notification applicative à destination du premier terminal. Cette notification applicative peut ainsi déclencher une application de service résidant sur le premier terminal de sorte à offrir une interface sur le terminal afférente à l'offre de service de communication voix considérée.

On peut notamment prévoir que la requête de communication reçue à l'étape /a/ provienne d'un terminal distinct du premier terminal de communication. Dans ce cas, il peut être avantageux de réveiller l'application de service sur le premier terminal de sorte à provoquer par exemple l'affichage d'une interface adaptée à l'offre du service de communication.

Dans un mode de réalisation, la notification applicative indique en outre au moins un troisième identifiant de réseau social. Tel peut être le cas lorsque la requête de communication indique le troisième identifiant de réseau social. Ce cas peut correspondre au fait qu'initialement plusieurs identifiants de réseau social ont été conviés à la communication voix dans une même requête de communication. Il est aussi possible que le serveur reçoive plusieurs requêtes de communication distinctes indiquant l'une le second identifiant de réseau social et au moins une autre le troisième identifiant de réseau social à des moments respectifs distincts. Dans ce cas, le serveur peut émettre une notification indiquant tous les identifiants de réseau social des personnes qui sont invitées à une communication voix en association avec le premier identifiant de réseau, c'est-à-dire dans ce cas, les deuxième et troisième identifiants de réseau social, ou bien émettre une pluralité de requêtes de communication.

La notification applicative peut aussi indiquer en outre un état de communication associé audit au moins troisième identifiant de réseau social. Ainsi, avantageusement, le serveur peut informer l'utilisateur du second terminal de l'état de communication de l'autre invité à la communication voix, c'est-à-dire de la personne à laquelle correspond le troisième identifiant de réseau social. Par 'état de communication' on peut entendre le fait que la communication voix est déjà établie avec le terminal de communication de cet autre invité ou non.

La notification applicative peut en outre indiquer un thème associé. Il s'agit ici d'informer l'utilisateur du second terminal de communication du thème que celui ayant généré la requête de communication souhaite aborder avec lui lors de la communication voix demandée.

Cette information, tout comme l'information de l'état de communication des autres invités à la communication peut être une aide à la prise de décision relative à l'acceptation de la communication voix. Ces informations contextuelles permettent d'enrichir avantageusement le service de communication visé en apportant un éclairage précis et détaillé sur le contexte de communication en cours.

La mise en communication entre les terminaux de communication peut être réalisée de différentes manières et aucune limitation n'est attachée à cet aspect de la présente invention.

La notification applicative peut notamment indiquer un identifiant de mise en communication permettant l'établissement d'une communication voix. Dans ce cas, en cas d'acceptation de la communication voix, le second terminal de communication peut déclencher lui-même la mise en communication vers cet identifiant.

L'identifiant de mise en communication peut correspond à un numéro de téléphone. Ici, le second terminal de communication peut composer le numéro de téléphone.

Le numéro de téléphone peut correspondre à un numéro de conférence téléphonique. Ce cas est avantageux lorsque plusieurs terminaux sont 'invités' à rejoindre la communication voix par l'initiateur de la requête de communication.

On peut alors prévoir que chaque terminal de communication (premier, second troisième, etc ..) dispose d'une application adaptée pour recevoir la notification applicative et composer le numéro de téléphone de la conférence visée sur acceptation de l'utilisateur à rejoindre la communication voix.

L'identifiant de mise en communication peut correspondre à l'identifiant de communication associé au premier terminal de communication. Tel peut être le cas lorsque le service de communication prévoit une mise en communication directe entre les premier et second terminaux de communication.

Dans un exemple, le procédé de gestion de service de communication comprend en outre les étapes suivantes :
/d/ réception d'une acceptation de communication depuis le second terminal de communication ;
/e/ mise en communication du second terminal de communication avec le premier terminal de communication, via ledit serveur.

Ces étapes /d/ et /e/ peuvent donc se produire dans certains modes de réalisation, lorsqu'un utilisateur du second terminal de communication qui a reçu la notification application selon un mode de réalisation de la présente invention accepte la communication voix avec la personne identifiée via son identifiant de réseau social.

Il convient de noter que ces étapes peuvent être réalisées sur n'importe quel serveur du réseau de communication.

Ainsi, sur réception de l'acceptation de communication voix, le serveur a en charge la mise en communication voix entre les premier et second terminaux de communication. En effet, d'un côté (étape /a/) a été reçue une requête de communication indiquant les identifiants de réseau social associés aux terminaux de communication à mettre en communication voix, et d'un autre côté a été reçue l'acceptation d'un terminal de communication (étape /d/).

Aucune limitation n'est attachée à la mise en communication voix entre les premier et second terminaux de communication. Ainsi, l'acception de communication reçue depuis le second terminal de communication au niveau du serveur peut être de tout type.

La présente invention vise un procédé de gestion de service de communication voix dans un réseau de communication entre un premier et au moins un second terminal de communication, dans lequel lesdits premier et second terminaux de communication ont des identifiants de communication respectifs dans le réseau de communication,
ledit procédé comprenant les étapes suivantes au niveau du second terminal de communication :
/1/ recevoir une notification applicative indiquant un premier identifiant de réseau social ;
/2/ afficher sur un écran du second terminal de communication au moins ledit premier identifiant de réseau social et une option sélectionnable adaptée pour déclencher une communication voix depuis le second terminal de communication avec le premier terminal de communication.

Avantageusement ici, un terminal de communication est en mesure d'afficher pour son utilisateur un identifiant de réseau social avec une option adaptée pour déclencher une communication voix depuis ce terminal. Grâce à la réception d'une notification applicative selon un mode de réalisation de la présente invention, on est en mesure de fournir une aide à la décision d'accepter une communication voix, sans toutefois devoir divulguer le numéro de téléphone de l'appelant. Pour ce faire, le terminal de communication peut disposer d'une application de service qui est adaptée pour être activée sur réception de la notification applicative et qui propose via une interface tactile par exemple, une communication voix relative à l'identifiant de réseau social affiché. Une telle application de service peut être de manière native sur le terminal ou encore être téléchargée depuis un site internet par exemple. Elle peut aussi contenir un identifiant de mise en communication qui lui permet d'initier la communication voix pour le terminal de communication dans le cas où l'option sélectionnable est sélectionnée. Elle peut aussi recevoir cet identifiant via la notification applicative ou une notification applicative ultérieure.

La notification applicative peut indiquer en outre au moins un troisième identifiant de réseau social et ledit troisième identifiant de réseau social peut en outre être affiché.

La notification applicative peut indiquer en outre un état de communication associé audit au moins troisième identifiant de réseau social, ledit état de communication étant en outre affiché.

La notification applicative peut indiquer en outre un thème associé.

Lorsque la notification applicative indique en outre un identifiant de mise en communication permettant l'établissement d'une communication voix, et lorsque l'option sélectionnable est sélectionnée, le second terminal de communication peut alors déclencher la mise en communication sur la base dudit identifiant de mise en communication. Bien sûr, l'identifiant de mise en communication peut être récupéré au niveau du terminal de communication par d'autres moyens, notamment par téléchargement préalable par exemple.

Le numéro de téléphone peut correspondre à un numéro de téléphone et, lorsque l'option sélectionnable est sélectionnée, le second terminal de communication peut alors déclencher la mise en communication en composant ledit numéro de téléphone. Ce déclenchement peut être réalisé de manière automatique et transparente pour l'utilisateur du terminal, via une application de service adaptée

Sur réception de la notification applicative, le second terminal de communication peut activer une application de service, l'étape /2/ étant réalisée via ladite application de service.

Le numéro de téléphone peut être composé automatiquement par l'application de service.

Une alarme sonore peut aussi être générée, au niveau du terminal de communication, sur réception de la notification applicative.

A l'étape /1/, on peut prévoir que la notification applicative indique un caractère privé ou public de la communication voix.

La présente invention vise aussi dans un exemple, un serveur de gestion de service de communication dans un réseau de communication entre un premier et au moins un second terminal de communication, dans lequel lesdits premier et second terminaux de communication ont des identifiants de communication respectifs dans le réseau de communication, lesdits premier et second identifiants de communication étant respectivement associés à des premier et second identifiants de réseau social dans un réseau social au niveau du serveur,
ledit serveur, accessible depuis le réseau de communication, comprenant :
/a/ une unité de réception adaptée pour recevoir une requête de communication indiquant au moins les premier et second identifiants de réseau social;
/b/ une unité d'identification adaptée pour identifier le second identifiant de communication à partir du second identifiant de réseau social reçu dans la requête de communication;
/c/ une unité d'émission adaptée pour émettre une notification applicative à destination du second terminal de communication sur la base du second identifiant de communication, ladite notification applicative indiquant le premier identifiant de réseau social.

Ce serveur peut être adapté pour la mise en œuvre d'un procédé de gestion de service de communication tel qu'énoncé ci-avant au niveau du serveur.

La présente invention vise aussi un terminal de communication ayant un identifiant de communication dans un réseau de communication, ledit terminal de communication comprenant les caractéristiques de la revendication 16.

Ce terminal de communication peut être adapté pour mettre en œuvre un procédé de gestion de service de communication tel que décrit ci-avant mis en œuvre au niveau du terminal de communication.

La présente invention vise aussi un système de gestion de service de communication dans un réseau de communication, comprenant un serveur selon un mode de réalisation et au moins un terminal de communication selon un mode de réalisation de la présente invention.

La présente invention vise en outre un programme d'ordinateur apte à être mis en œuvre sur un terminal de communication selon la revendication 16, le programme comprenant des instructions de code qui, lorsque le programme est exécuté par un processeur, réalise les étapes du procédé mises en œuvre au niveau du terminal.

Ce programme d'ordinateur peut correspondre à une application de service selon un mode de réalisation de la présente invention. Il peut être téléchargeable depuis un site par exemple. Il permet donc de gérer la réception de la notification applicative, ainsi que d'offrir une interface utilisateur permettant d'afficher au moins l'identifiant de réseau social de l'appelant, ainsi que l'option sélectionnable pour déclencher, c'est-à-dire accepter, la communication voix proposée.

L'invention sera mieux comprise à la lecture de la description qui suit, donnée à titre d'exemple et faite en référence aux dessins annexés.

Les figures:
La figure 1 représente un réseau de communication selon un mode de réalisation de la présente invention.
La figure 2 illustre une mise en œuvre d'un procédé de gestion de service de communication selon un mode de réalisation de la présente invention.
Les figures 3-a, 3-b et 3-c illustrent une interface d'une application de service selon un mode de réalisation de la présente invention.
La figure 4 illustre une interface côté appelant selon un mode de réalisation de la présente invention.
La figure 5 illustre un procédé de gestion de service de communication selon un mode de réalisation de la présente invention.

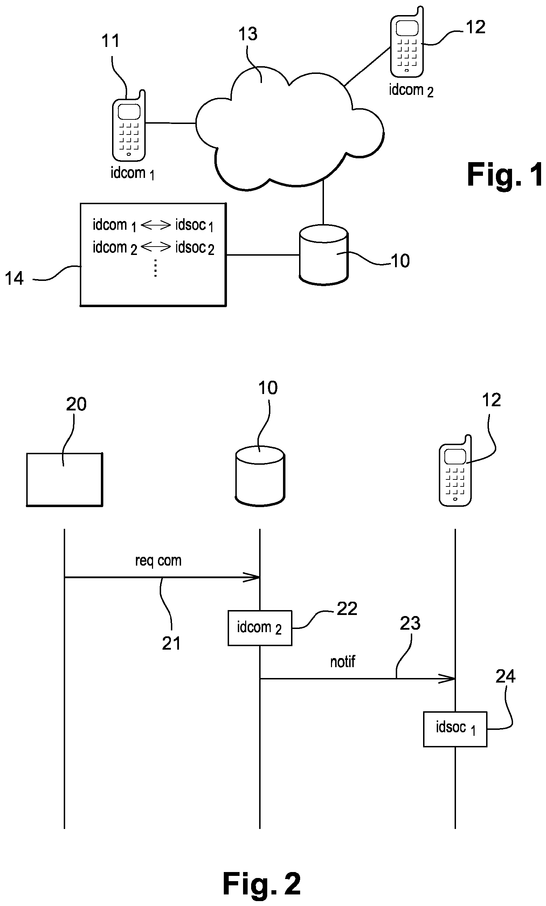

La figure 1 représente un réseau de communication 13 selon un mode de réalisation de la présente invention. Un terminal de communication 11 et un terminal de communication 12, ci-après référencé terminal 11 et terminal 12 sont des terminaux du réseau de communication 13 dans le sens où ils ont des identifiants de communication reconnus dans ce réseau, respectivement idcom1 et idcom 2. Un serveur 10 est aussi accessible dans ce réseau de communication, ce dernier ayant accès à des informations d'association 14. Ces informations peuvent être stockées dans une base de données, elles représentent une association des identifiants de communication reconnus dans ce réseau avec des identifiants de réseau social, respectivement idsoc1 et isoc2 pour les identifiants de communication icom1 et idcom2. Ces informations peuvent être renseignées au préalable par tout mécanisme qui permet de construire cette association.

Le réseau 13 peut être un réseau de communication mobile qui offre à la fois la possibilité de communications données et de communication voix. Dans ce cas, les terminaux 11 et 12 sont des terminaux de téléphonie mobile. A titre d'exemple, la présente invention sera décrite dans ce type de contexte. Mais cela ne limite en rien les domaines d'application de l'invention, puisqu'il s'agit seulement et simplement d'illustrer les mécanismes de la présente invention, sans les limiter.

La figure 2 illustre une mise en œuvre d'un procédé de gestion de service de communication selon un mode de réalisation de la présente invention. Il est à noter qu'un terminal 20 émet une requête de communication 21 au sens de la présente invention. Ce terminal peut être n'importe quel type de terminal qui est en mesure de transmettre un message au serveur 10 via le réseau de communication 13. Il peut correspondre au terminal 11, ou encore être un autre terminal.

Etant donné que la requête de communication 21 indique au moins les premier et second identifiants de réseau social qui sont associés aux idcom1 et idcom2, référence 14, il peut être avantageux de prévoir de générer cette requête depuis le terminal 20, et plus particulièrement depuis le réseau social considéré, environnement le plus propice à permettre de manière aisée à indiquer les identifiants de réseau social considérés. On peut prévoir plus précisément qu'une application de service au sens de la présente invention 'connectée' ou reliée ou intégrée au réseau social. Ainsi, une telle application permettrait à l'utilisateur, dénommé ci-après 'appelant', de générer cette requête depuis une interface appropriée de l'application de service.

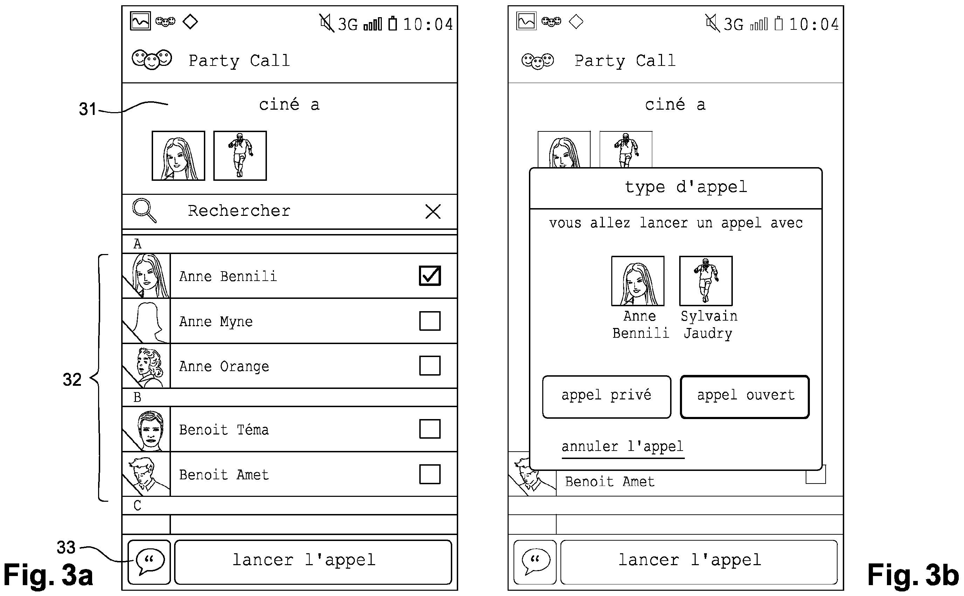

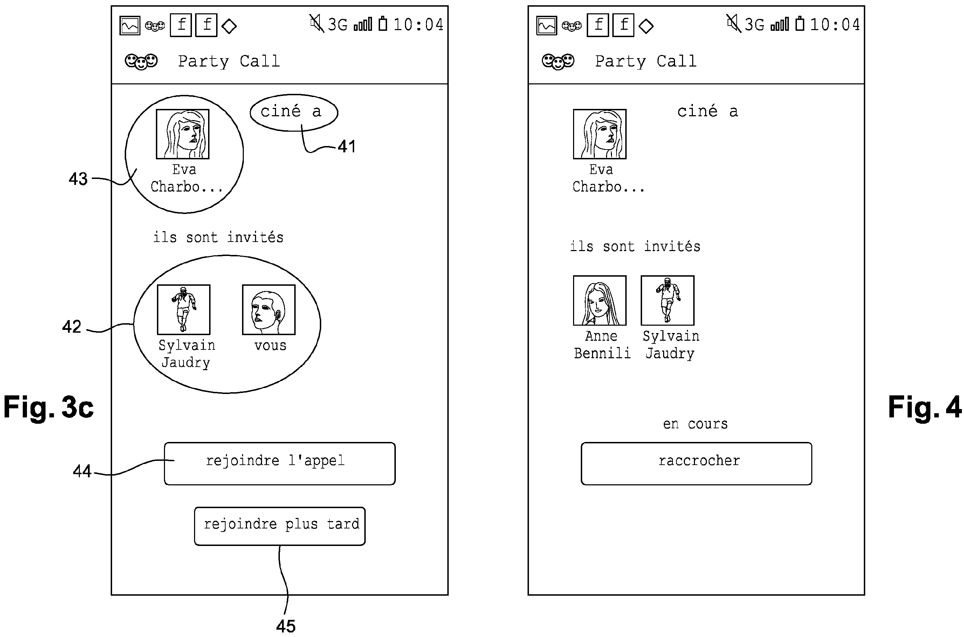

La figure 3-a, 3-b illustre une telle interface d'une telle application.

Su réception de la requête 21, le serveur 10 récupère l'idcom2 associé à l'idsoc2 indiqué dans la requête 21, en une étape 22. Puis, il émet une notification applicative 23 à destination du terminal 12 sur le réseau de communication. Sur réception de cette notification applicative 23, un affichage est déclenché en une étape 24, fournissant à un utilisateur du terminal 12, l'identifiant de réseau social de celui indiqué dans la requête 21.

Sur la figure 3-a on peut ainsi prévoir différentes fenêtres :
une fenêtre 31 dans laquelle un thème est associé à la communication voix en cours de lancement. Ici, le thème est 'ciné'.
Cette fenêtre peut aussi indiquer les différents invités à participer à la communication voix. Ici, dans l'exemple ces invités sont identifiés par leur image dans le réseau social, qui peut être un identifiant de réseau social au sens de la présente invention ;
une fenêtre 32 dans laquelle sont listés les identifiants de réseau social qui peuvent être sélectionnés pour lancer la communication voix ;
une fenêtre 33 qui permet à l'utilisateur appelant de lancer les invitations pour inviter les personnes sélectionnées sur leur base de leur identifiant de réseau social à se joindre à une communication voix.

Grâce à cette interface, il est aisé pour l'utilisateur appelant de lancer une conférence téléphonique par exemple, en sélectionnant rapidement les identifiants de réseau social, en indiquant un thème à l'appel, avant de cliquer sur l'icône.

La figure 3-b illustre une interface permettant de sélectionner si l'appel à lancer est ouvert (c'est-à-dire public) ou privé. Si l'appel est public, d'autres personnes du réseau social sont en mesure de connaître l'existence de cette communication voix et éventuellement de pouvoir la rejoindre. Si l'appel est privé, seuls les invités à la communication voix en cours de lancement peuvent en avoir connaissance.

La figure 4 illustre une interface côté appelant, sur le terminal 20 par exemple, lorsque l'appelant a lancé l'appel.

Sur réception de la requête de communication 21 qui indique donc l'identifiant de réseau social sélectionné par l'appelant, le serveur consulte les données associées 14 afin de récupérer l'identifiant de communication associé. Il s'agit ici de l'identifiant idcom2. Dans l'exemple présent, l'idcom2 correspond au numéro de téléphone du terminal 12.

Le serveur 10 émet alors une notification applicative 23 à destination du terminal 12, cette notification indiquant au moins l'identifiant de réseau social de l'appelant idsoc1.

A cette étape, sur réception de cette notification 23, on peut avantageusement prévoir que le terminal 12 émet une alerte sonore, de préférence distincte de celle émise par l'arrivée d'un appel entrant classique. On peut aussi prévoir qu'un affichage automatique sans aucune intervention de l'utilisateur du terminal 12 soit déclenché de sorte à sortir le terminal 12 d'un éventuel mode de veille et de sorte à permettre rapidement à l'utilisateur d'avoir accès aux informations utiles pour prendre la décision de poursuivre et donc d'accepter la communication voix, ou encore de retarder cette décision.

La figure 3-c illustre une interface d'une application de service selon un mode de réalisation de la présente invention.

Dans l'exemple pris, il y a deux invités 42 à la communication vocale, le thème de la communication est également affiché 41 'ciné' et l'appelant est affiché 43. L'appelant et les invités sont identifiés à travers cet interface simple par leur identifiant de réseau social.

Une option sélectionnable 44 est adaptée pour déclencher une communication voix depuis le terminal 12 avec le terminal 11.

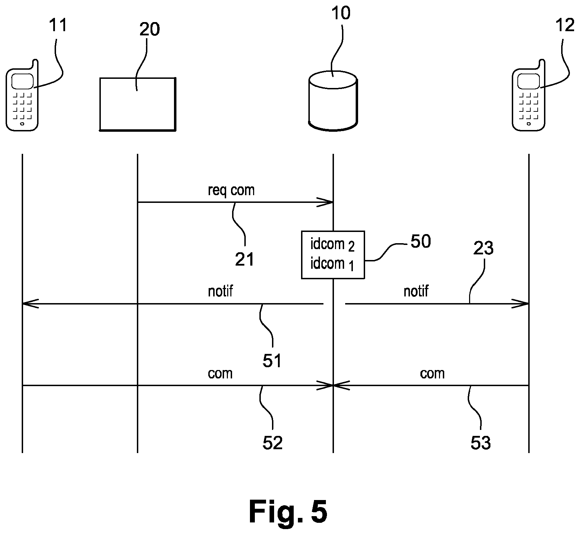

La figure 5 illustre un procédé de gestion de service de communication selon un mode de réalisation de la présente invention. Ici, pour exemple le terminal 20 est distinct du terminal 11. Mais ce mécanisme s'applique aussi lorsque la requête de communication est issue directement du terminal 11. Sur réception de cette requête de communication, le serveur récupère 50 les identifiants de communication idcom1 et idcom 2, c'est-à-dire dans cet exemple les numéros de téléphone mobile des terminaux 11 e 12, sur la base des identifiants de réseau social de la requête 21. Ainsi, il est en mesure d'envoyer une notification applicative 51 également vers le terminal 11. Cette notification 51 peut contenir un identifiant de mise en communication qui permet de mettre le terminal 11 en communication voix. On peut prévoir la mise en communication du terminal 11 est automatique puisqu'elle correspond à la partie appelante, contrairement à la partie invitée 12 qui peut décider de ne pas donner suite à l'invitation.

Dans le cas d'une pluralité d'invités, on peut prévoir d'émettre une ou plusieurs requêtes de communication. Puis le serveur génère alors une notification de communication vers chacun des invités et éventuellement aussi vers la partie appelante 11.

Chacun des terminaux 11, 12 dispose d'une application de service qui est adaptée pour réceptionner la notification applicative et pour fournir une interface utilisateur pour l'accès et la gestion du service au niveau des terminaux.

L'établissement de la communication voix entre l'appelant, c'est-à-dire celui qui initie l'émission de la requête de communication, et les invités, c'est-à-dire ceux qui ont été sélectionnés et qui apparaissent dans la requête de communication sous la forme d'identifiants de réseau social, peut se faire de diverses manière et en aucune façon ne limite l'étendue de la présente invention.

A titre d'exemple, on peut prévoir que soit l'application de service, soit la notification application indique un numéro de téléphone. Ainsi, sur réception d'une telle notification, le terminal 11 ou 12 est en mesure de déclencher l'appel vers ce numéro de téléphone. Cette étape est illustrée par la génération d'un message 'com' 52 depuis le terminal 11 et 53 depuis le terminal 13 qui correspondent à un appel téléphonique vers un numéro connu depuis les terminaux 11 et 12. Ce numéro de téléphone peut avantageusement être un numéro de conférence téléphonique. Dans ce cas, la communication voix peut accueillir plusieurs invités identifiés sous leurs identifiants de réseau social. La communication voix peut alors gérée comme une conférence, de sorte que des messages d'attente peuvent être notamment joués dans l'attente par exemple de l'appelant si ce dernier rejoint la conférence après certains de ses invités.

## Revendications

1. Procédé de gestion de service de communication téléphonique dans un réseau de communication (13) entre un premier (11) et au moins un second terminal de communication (12), dans lequel lesdits premier et second terminaux de communication ont des identifiants de communication respectifs dans le réseau de communication, lesdits premier et second identifiants de communication étant respectivement associés, au niveau d'un serveur (10), à des premier et second identifiants de réseau social d'un réseau social (14), ledit serveur étant accessible depuis le réseau de communication, ledit procédé comprenant les étapes suivantes au niveau du serveur :
/a/ recevoir une requête de communication (21) indiquant au moins les premier et second identifiants de réseau social;
/b/ identifier (22) le second identifiant de communication à partir du second identifiant de réseau social reçu dans la requête de communication;
/c/ émettre une notification applicative (23) à destination du second terminal de communication sur la base du second identifiant de communication, ladite notification applicative indiquant le premier identifiant de réseau social, la notification applicative comportant en outre un numéro de téléphone,
le procédé se poursuivant par un appel téléphonique depuis le second terminal de communication (12) vers ledit numéro de téléphone.

2. Procédé de gestion de service de communication selon la revendication 1, comprenant en outre les étapes suivantes, après l'étape /a/: /i/ identifier le premier identifiant de communication à partir du premier identifiant de réseau social reçu dans la requête de communication; /ii/ émettre une notification applicative à destination du premier terminal de communication sur la base du premier identifiant de communication.

3. Procédé de gestion de service de communication selon la revendication 1 ou 2, dans lequel, la notification applicative indique en outre au moins un troisième identifiant de réseau social.

4. Procédé de gestion de service de communication selon l'une quelconque des revendications précédentes, dans lequel la notification applicative indique en outre un état de communication associé audit au moins troisième identifiant de réseau social.

5. Procédé de gestion de selon l'une quelconque des revendications précédentes, dans lequel la notification applicative indique en outre un identifiant de mise en communication permettant l'établissement d'une communication voix.

6. Procédé de gestion de service de communication selon l'une quelconque des revendications précédentes, comprenant en outre les étapes suivantes au niveau du serveur : /d/ réception d'une acceptation de communication depuis le second terminal de communication ; /e/ mise en communication du second terminal de communication avec le premier terminal de communication, via ledit serveur.

7. Procédé de gestion de service de communication voix dans un réseau de communication (13) entre un premier (11) et au moins un second terminal de communication (12), dans lequel lesdits premier et second terminaux de communication ont des identifiants de communication respectifs dans le réseau de communication, ledit procédé comprenant les étapes suivantes au niveau du second terminal de communication :
/1/ recevoir une notification applicative (23) émise par un serveur (10) et indiquant un premier identifiant de réseau social, la notification applicative comportant en outre un numéro de téléphone du premier terminal ;
/2/ afficher (24) sur un écran du second terminal de communication au moins ledit premier identifiant de réseau social et une option sélectionnable adaptée pour déclencher un appel téléphonique depuis le second terminal de communication avec le premier terminal de communication.

8. Procédé de gestion de service de communication selon la revendication 7, dans lequel, la notification applicative indique en outre au moins un troisième identifiant de réseau social et dans lequel ledit troisième identifiant de réseau social est en outre affiché.

9. Procédé de gestion de service de communication selon la revendication 8, dans lequel la notification applicative indique en outre un état de communication associé audit au moins troisième identifiant de réseau social, ledit état de communication étant en outre affiché.

10. Procédé de gestion de service de communication selon l'une quelconque des revendications 7 à 9, dans lequel la notification applicative indique en outre un thème associé.

11. Procédé de gestion de service de communication selon l'une quelconque des revendications 7 à 10, dans lequel la notification applicative indique en outre un identifiant de mise en communication permettant l'établissement de l'appel téléphonique, et dans lequel, lorsque l'option sélectionnable est sélectionnée, le second terminal de communication déclenche la mise en communication sur la base dudit identifiant de mise en communication.

12. Procédé de gestion de service de communication selon la revendication 11, dans lequel l'identifiant de mise en communication correspond audit numéro de téléphone et dans lequel, lorsque l'option sélectionnable est sélectionnée, le second terminal de communication déclenche la mise en communication en composant ledit numéro de téléphone.

13. Procédé de gestion de service de communication selon l'une quelconque des revendications 7 à 12, dans lequel, sur réception de la notification applicative, le second terminal de communication active une application de service, l'étape /2/ étant réalisée via ladite application de service.

14. Serveur (10) de gestion de service de communication dans un réseau de communication entre un premier (11) et au moins un second (12) terminal de communication, dans lequel lesdits premier et second terminaux de communication ont des identifiants de communication respectifs dans le réseau de communication, lesdits premier et second identifiants de communication étant respectivement associés à des premier et second identifiants de réseau social dans un réseau social au niveau du serveur, ledit serveur, accessible depuis le réseau de communication, comprenant :
/a/ une unité de réception adaptée pour recevoir une requête de communication indiquant au moins les premier et second identifiants de réseau social et pour recevoir un message (53) correspondant à un appel téléphonique depuis le second terminal de communication (12) vers un numéro de téléphone; /b/ une unité d'identification adaptée pour identifier le second identifiant de communication à partir du second identifiant de réseau social reçu dans la requête de communication; /c/ une unité d'émission adaptée pour émettre une notification applicative à destination du second terminal de communication sur la base du second identifiant de communication, ladite notification applicative indiquant le premier identifiant de réseau social et comportant en outre ledit numéro de téléphone.

15. Serveur selon la revendication 14, adapté pour la mise en œuvre d'un procédé de gestion de service de communication selon l'une quelconques des revendications 1 à 6.

16. Terminal de communication (11) ayant un identifiant de communication dans un réseau de communication, ledit terminal de communication comprenant : a/ une unité de réception adaptée pour recevoir d'un serveur (10) une notification applicative indiquant un identifiant de réseau social, la notification applicative comportant en outre un numéro de téléphone; b/ une unité d'affichage adaptée pour afficher sur l'écran du terminal de communication au moins ledit identifiant de réseau social et une option sélectionnable adaptée pour déclencher un appel vers ledit numéro de téléphone, le terminal étant adapté à mettre en œuvre le procédé selon l'une quelconques des revendications 7 à 13.

17. Système de gestion de service de communication dans un réseau de communication, comprenant un serveur selon l'une des revendications 14 et 15 et au moins un terminal de communication selon la revendication 16.

18. Programme d'ordinateur apte à être mis en œuvre sur un terminal de communication selon la revendication 16, le programme comprenant des instructions de code qui, lorsque le programme est exécuté par un processeur (13), réalise les étapes du procédé défini selon l'une des revendications 7 à 13.

## Patentansprüche

1. Verfahren zum Verwalten eines Telefonkommunikationsdienstes in einem Kommunikationsnetzwerk (13) zwischen einem ersten (11) und mindestens einem zweiten Kommunikationsendgerät (12), wobei das erste und zweite Kommunikationsendgerät eine jeweilige Kommunikationskennung in dem Kommunikationsnetzwerk aufweisen, wobei die erste und zweite Kommunikationskennung auf einem Server (10) jeweils mit einer ersten und zweiten sozialen Netzwerkkennung eines sozialen Netzwerks (14) assoziiert sind, wobei von dem Kommunikationsnetzwerk aus auf den Server zugegriffen werden kann, wobei das Verfahren auf dem Server die folgenden Schritte beinhaltet:
/a/ Empfangen einer Kommunikationsanforderung (21), die mindestens die erste und zweite soziale Netzwerkkennung angibt;
/b/ Identifizieren (22) der zweiten Kommunikationskennung anhand der in der Kommunikationsanforderung empfangenen zweiten sozialen Netzwerkkennung;
/c/ Senden einer Anwendungsbenachrichtigung (23) an das zweite Kommunikationsendgerät basierend auf der zweiten Kommunikationskennung, wobei die Anwendungsbenachrichtigung die erste soziale Netzwerkkennung angibt, wobei die Anwendungsbenachrichtigung ferner eine Telefonnummer umfasst,
wobei das Verfahren mit einem Telefonanruf von dem zweiten Kommunikationsendgerät (12) an die Telefonnummer fortfährt.

2. Verfahren zum Verwalten eines Kommunikationsdienstes nach Anspruch 1, das ferner nach dem Schritt /a/ die folgenden Schritte beinhaltet: /i/ Identifizieren der ersten Kommunikationskennung anhand der in der Kommunikationsanforderung empfangenen ersten sozialen Netzwerkkennung; /ii/ Senden einer Anwendungsbenachrichtigung an das erste Kommunikationsendgerät basierend auf der ersten Kommunikationskennung.

3. Verfahren zum Verwalten eines Kommunikationsdienstes nach Anspruch 1 oder 2, wobei die Anwendungsbenachrichtigung ferner mindestens eine dritte soziale Netzwerkkennung angibt.

4. Verfahren zum Verwalten eines Kommunikationsdienstes nach einem der vorhergehenden Ansprüche, wobei die Anwendungsbenachrichtigung ferner einen mit der mindestens dritten sozialen Netzwerkkennung assoziierten Kommunikationszustand angibt.

5. Verfahren zum Verwalten von nach einem der vorhergehenden Ansprüche, wobei die Anwendungsbenachrichtigung ferner eine Kommunikationsaufbaukennung angibt, die die Herstellung einer Sprachkommunikation ermöglicht.

6. Verfahren zum Verwalten eines Kommunikationsdienstes nach einem der vorhergehenden Ansprüche, das ferner auf dem Server die folgenden Schritte beinhaltet: /d/ Empfangen einer Kommunikationsannahme von dem zweiten Kommunikationsendgerät; /e/ Aufbauen einer Kommunikation des zweiten Kommunikationsendgeräts mit dem ersten Kommunikationsendgerät über den Server.

7. Verfahren zum Verwalten eines Sprachkommunikationsdienstes in einem Kommunikationsnetzwerk (13) zwischen einem ersten (11) und mindestens einem zweiten Kommunikationsendgerät (12), wobei das erste und zweite Kommunikationsendgerät eine jeweilige Kommunikationskennung in dem Kommunikationsnetzwerk aufweisen, wobei das Verfahren in dem zweiten Kommunikationsendgerät die folgenden Schritte beinhaltet:
/1/ Empfangen einer von einem Server (10) gesendeten Anwendungsbenachrichtigung (23), die eine erste soziale Netzwerkkennung angibt, wobei die Anwendungsbenachrichtigung ferner eine Telefonnummer des ersten Kommunikationsendgerät umfasst;
/2/ Anzeigen (24), auf einem Bildschirm des zweiten Kommunikationsendgeräts, mindestens der ersten sozialen Netzwerkkennung und einer auswählbaren Option, die dazu ausgelegt ist, eine Telefonanruf des zweiten Kommunikationsendgeräts mit dem ersten Kommunikationsendgerät einzuleiten.

8. Verfahren zum Verwalten eines Kommunikationsdienstes nach Anspruch 7, wobei die Anwendungsbenachrichtigung ferner mindestens eine dritte soziale Netzwerkkennung angibt und wobei die dritte soziale Netzwerkkennung ferner angezeigt wird.

9. Verfahren zum Verwalten eines Kommunikationsdienstes nach Anspruch 8, wobei die Anwendungsbenachrichtigung ferner einen mit der mindestens dritten sozialen Netzwerkkennung assoziierten Kommunikationszustand angibt, wobei der Kommunikationszustand ferner angezeigt wird.

10. Verfahren zum Verwalten eines Kommunikationsdienstes nach einem der Ansprüche 7 bis 9, wobei die Anwendungsbenachrichtigung ferner ein assoziiertes Thema angibt.

11. Verfahren zum Verwalten eines Kommunikationsdienstes nach einem der Ansprüche 7 bis 10, wobei die Anwendungsbenachrichtigung ferner eine Kommunikationsaufbaukennung angibt, die die Herstellung einer Telefonanruf ermöglicht, und wobei das zweite Kommunikationsendgerät, wenn die auswählbare Option ausgewählt wird, den Kommunikationsaufbau basierend auf der Kommunikationsaufbaukennung einleitet.

12. Verfahren zum Verwalten eines Kommunikationsdienstes nach Anspruch 11, wobei die Kommunikationsaufbaukennung der Telefonnummer entspricht und wobei das zweite Kommunikationsendgerät, wenn die auswählbare Option ausgewählt wird, den Kommunikationsaufbau durch das Wählen der Telefonnummer einleitet.

13. Verfahren zum Verwalten eines Kommunikationsdienstes nach einem der Ansprüche 7 bis 12, wobei das zweite Kommunikationsendgerät bei Empfang der Anwendungsbenachrichtigung eine Dienstanwendung aktiviert, wobei der Schritt /2/ über die Dienstanwendung realisiert wird.

14. Server (10) zum Verwalten eines Kommunikationsdienstes in einem Kommunikationsnetzwerk zwischen einem ersten (11) und mindestens einem zweiten (12) Kommunikationsendgerät, wobei das erste und zweite Kommunikationsendgerät eine jeweilige Kommunikationskennung in dem Kommunikationsnetzwerk aufweisen, wobei die erste und zweite Kommunikationskennung auf dem Server jeweils mit einer ersten und zweiten sozialen Netzwerkkennung in einem sozialen Netzwerk assoziiert sind, wobei der Server, auf den von dem Kommunikationsnetzwerk aus zugegriffen werden kann, Folgendes beinhaltet:
/a/ eine Empfangseinheit, die dazu ausgelegt ist, eine Kommunikationsanforderung, die mindestens die erste und zweite soziale Netzwerkkennung angibt, zu empfangen und eine Nachricht (53), die einem Telefonanruf des zweiten Kommunikationsendgeräts (12) an eine Telefonnummer entspricht, zu empfangen; /b/ eine Identifizierungseinheit, die dazu ausgelegt ist, die zweite Kommunikationskennung anhand der in der Kommunikationsanforderung empfangenen zweiten sozialen Netzwerkkennung zu identifizieren; /c/ eine Sendeeinheit, die dazu ausgelegt ist, basierend auf der zweiten Kommunikationskennung eine Anwendungsbenachrichtigung an das zweite Kommunikationsendgerät zu senden, wobei die Anwendungsbenachrichtigung die erste soziale Netzwerkkennung angibt und ferner die Telefonnummer umfasst.

15. Server nach Anspruch 14, der dazu ausgelegt ist, ein Verfahren zum Verwalten eines Kommunikationsdienstes nach einem der Ansprüche 1 bis 6 umzusetzen.

16. Kommunikationsendgerät (11), das eine Kommunikationskennung in einem Kommunikationsnetzwerk aufweist, wobei das Kommunikationsendgerät Folgendes beinhaltet: a/ eine Empfangseinheit, die dazu ausgelegt ist, von einem Server (10) eine Anwendungsbenachrichtigung zu empfangen, die eine soziale Netzwerkkennung angibt, wobei die Anwendungsbenachrichtigung ferner eine Telefonnummer umfasst; b/ eine Anzeigeeinheit, die dazu ausgelegt ist, auf dem Bildschirm des Kommunikationsendgeräts mindestens die soziale Netzwerkkennung und eine auswählbare Option, die dazu ausgelegt ist, einen Anruf an die Telefonnummer einzuleiten, anzuzeigen, wobei das Endgerät dazu ausgelegt ist, das Verfahren nach einem der Ansprüche 7 bis 13 umzusetzen.

17. System zum Verwalten eines Kommunikationsdienstes in einem Kommunikationsnetzwerk umfassend einen Server nach einem der Ansprüche 14 und 15 und mindestens ein Kommunikationsendgerät nach Anspruch 16.

18. Computerprogramm, das auf einem Kommunikationsendgerät nach Anspruch 16 implementiert werden kann, wobei das Programm, das Codeanweisungen umfasst, die, wenn das Programm von einem Prozessor ausgeführt wird, die Schritte des Verfahrens ausführen, das gemäß einem der Ansprüche 7 bis 13 definiert ist.

## Claims

1. Method of management of telephone communication service in a communication network (13) between a first (11) and at least a second communication terminal (12), in which said first and second communication terminals have respective communication identifiers in the communication network, said first and second communication identifiers being respectively associated, at the level of a server (10), with first and second social network identifiers of a social network (14), said server being accessible from the communication network, said method comprising the following steps at the level of the server:
/a/ receiving a communication request (21) indicating at least the first and second social network identifiers;
/b/ identifying (22) the second communication identifier on the basis of the second social network identifier received in the communication request;
/c/ sending an applicative notification (23) destined for the second communication terminal on the basis of the second communication identifier, said applicative notification indicating the first social network identifier, the applicative notification furthermore comprising a telephone number,
the method continuing with a telephone call from the second communication terminal (12) to said telephone number.

2. Method of management of communication service according to Claim 1, furthermore comprising the following steps, after step /a/: /i/ identifying the first communication identifier on the basis of the first social network identifier received in the communication request; /ii/ sending an applicative notification destined for the first communication terminal on the basis of the first communication identifier.

3. Method of management of communication service according to Claim 1 or 2, in which the applicative notification furthermore indicates at least a third social network identifier.

4. Method of management of communication service according to any one of the preceding claims, in which the applicative notification furthermore indicates a communication state associated with said at least third social network identifier.

5. Method of management of according to any one of the preceding claims, in which the applicative notification furthermore indicates an identifier of communication setup allowing the establishment of a voice communication.

6. Method of management of communication service according to any one of the preceding claims, furthermore comprising the following steps at the level of the server: /d/ reception of an acceptance of communication from the second communication terminal; /e/ setup of communication of the second communication terminal with the first communication terminal, via said server.

7. Method of management of voice communication service in a communication network (13) between a first (11) and at least a second communication terminal (12), in which said first and second communication terminals have respective communication identifiers in the communication network, said method comprising the following steps at the level of the second communication terminal:
/1/ receiving an applicative notification (23) sent by a server and indicating a first social network identifier, the applicative notification furthermore comprising a telephone number of the first communication terminal;
/2/ displaying (24) on a screen of the second communication terminal at least said first social network identifier and a selectable option suitable for triggering a telephone call from the second communication terminal with the first communication terminal.

8. Method of management of communication service according to Claim 7, in which the applicative notification furthermore indicates at least a third social network identifier and in which said third social network identifier is furthermore displayed.

9. Method of management of communication service according to Claim 8, in which the applicative notification furthermore indicates a communication state associated with said at least third social network identifier, said communication state being furthermore displayed.

10. Method of management of communication service according to any one of Claims 7 to 9, in which the applicative notification furthermore indicates an associated topic.

11. Method of management of communication service according to any one of Claims 7 to 10, in which the applicative notification furthermore indicates an identifier of communication setup allowing the establishment of a telephone call, and in which, when the selectable option is selected, the second communication terminal triggers the communication setup on the basis of said identifier of communication setup.

12. Method of management of communication service according to Claim 11, in which the identifier of communication setup corresponds to said telephone number and in which, when the selectable option is selected, the second communication terminal triggers the communication setup by dialling said telephone number.

13. Method of management of communication service according to any one of Claims 7 to 12, in which, on receipt of the applicative notification, the second communication terminal activates a service application, step /2/ being carried out via said service application.

14. Server (10) for management of communication service in a communication network between a first (11) and at least a second (12) communication terminal, in which said first and second communication terminals have respective communication identifiers in the communication network, said first and second communication identifiers being respectively associated with first and second social network identifiers in a social network at the level of the server, said server, accessible from the communication network, comprising:
/a/ a reception unit suitable for receiving a communication request indicating at least the first and second social network identifiers and for receiving a message (53) corresponding to a telephone call from the second communication terminal (12) to a telephone number; /b/ an identification unit suitable for identifying the second communication identifier on the basis of the second social network identifier received in the communication request; /c/ a sending unit suitable for sending an applicative notification destined for the second communication terminal on the basis of the second communication identifier, said applicative notification indicating the first social network identifier and furthermore comprising said telephone number.

15. Server according to Claim 14, suitable for the implementation of a method of management of communication service according to any one of Claims 1 to 6.

16. Communication terminal (11) having a communication identifier in a communication network, said communication terminal comprising: a/ a reception unit suitable for receiving from a server (10) an applicative notification indicating a social network identifier, the applicative notification furthermore comprising a telephone number; b/ a display unit suitable for displaying on the screen of the communication terminal at least said social network identifier and a selectable option suitable for triggering a call to said telephone number, the terminal being suitable for implementing the method according to any one of Claims 7 to 13.

17. System of management of telephone communication service in a communication network comprising a server according to any of claims 14 and 15 and at least one communication terminal according to claim 16.

18. Computer program capable of being implemented on a communication terminal according to claim 16, the program comprising code instructions which, when the program is executed by a processor (13), carries out the steps of the method according to any of claims 7 to 13.
